# EUROPÄISCHE PATENTANMELDUNG

(11) **EP 0 854 178 A1**
(43) Veröffentlichungstag der Anmeldung: **22.07.1998**
(21) Anmeldenummer: 98100095.3
(22) Anmeldetag: 07.01.1998
(51) Int. Cl.: C09J 121/00, C09J 7/02, C08J 3/00, B29B 7/00

(54) **Verfahren zur Herstellung druckempfindlicher Heissschmelz-Klebemassen sowie deren Verwendung zur Herstellung von Selbstklebebändern**

(30) Priorität: 17.01.1997 DE 19701473
(71) Anmelder: Beiersdorf Aktiengesellschaft, 20245 Hamburg (DE)
(72) Erfinder: Burmeister, Axel, 22307 Hamburg (DE); Leydecker, Heiko, 23730 Neustadt (DE); Stähr, Jochen, 30179 Hannover (DE)

(57) **Zusammenfassung**

Druckempfindliche Hotmelt-Klebemasse auf der Basis nicht-thermoplastischer Elastomerer, erhalten dadurch, daß
a) als Vorbatch eine Masse aus den Elastomeren und einem oder mehreren der folgenden Zusatzstoffe wie Füllstoffe, Alterungsschutzmittel, Weichmacher und Klebharze in einem intensiv scherenden, intensiv kühlenden Mischaggregat lösungsmittelfrei hergestellt wird, wobei die Masse eine Endtemperatur von 100 °C bis 160 °C aufweist,
b) der Vorbatch in einem zweiten Mischaggregat mit einem oder mehreren der folgenden Zusatzstoffe wie Füllstoffe, Alterungsschutzmittel, Weichmacher und Klebharze lösungsmittelfrei vermischt und homogenisiert wird, wobei die Masse eine Endtemperatur von 100 °C bis 160 °C aufweist,
   und wobei die Gesamtverweilzeit der Masse bei Temperaturen über 100 °C einen Wert von 6 Minuten nicht überschreitet,
   so daß die resultierende Hotmelt-Klebmasse eine Viskosität von mehr als 900 Pa*s, insbesondere 900 Pa*s bis 1200 Pa*s, bei 130 °C und einem Schergefälle von 100 s⁻¹ aufweist.

## Beschreibung

Die Erfindung betrifft hochleistungsfähige, druckempfindliche Hotmelt-Klebemassen sowie die Verwendung dieser Hotmelt-Klebemassen zur Herstellung von Selbstklebebändern.

Druckempfindliche Kleber aus nicht-thermoplastischen Elastomeren oder Kautschuken zählen zum Stand der Technik. Die Verarbeitung erfolgt dabei unter Zuhilfenahme von Lösungsmitteln. Alternativ kann die Herstellung des Klebers aus Kautschuken erfolgen, in dem der Kautschuk einer Mastikation unterworfen wird, was aber die klebenden Eigenschaften der späteren Klebemasse einschränkt. Beide Verfahren zeigen sich als arbeits- und materialintensiv, insbesondere ersteres sollte schon aus ökologischen und sicherheitstechnischen Gesichtspunkten heutzutage nicht mehr gewählt werden. Weiterhin weisen sie einen vergleichbar geringen Durchsatz auf, der nur durch hohen apparativen und damit finanziellen Aufwand gesteigert werden kann. Einen umfassenden Überblick über die übliche Verarbeitung von Kautschuken zu Klebemasse ist in dem Buch 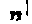 Handbook of Pressure Sensitive Adhesive Technology" von Donald Satas, Van Nostrad, New York, 1989, zu finden.

Der Einsatz von Naturkautschuk und anderen hochmolekularen Elastomeren in druckempfindlichen Schmelzhaftklebern hat sich auf der anderen Seite bis heute nicht durchgesetzt. Nach derzeitigem Stand der Technik wird bei den üblichen Hotmelt-Misch- und Beschichtungsprozessen der notwendige Durchsatz nicht erreicht und/oder der Kautschuk so stark abgebaut, daß die Anforderungen an die resultierenden Klebebänder auch bei anschließender Strahlenvernetzung nicht erfüllt werden können, während der Einsatz der bekannten thermisch reaktiven Vernetzer durch die notwendigerweise sehr hohen Verarbeitungstemperaturen ausgeschlossen ist.

So wird in WO 94/11175 ein Verfahren beschrieben, das einen lösungsmittelfreien Hotmeltprozeß zur Herstellung eines druckempfindlichen Klebers umfaßt. Dabei wird ein nicht-thermoplastisches Elastomer in ein kontinuierlich arbeitendes Gerät gegeben, in dem die Masse abwechselnd gefördert und mastiziert wird. Anschließend wird in einem weiteren Prozeßschritt ein klebrigmachendes Harz zugegeben. Der daraus dann hergestellte Blend kann weiterverarbeitet werden, wobei der Blend einen druckempfindlichen Kleber umfaßt, der charakteristischerweise weniger als 10 Gew.-% Plastifizierer enthält. Insbesondere die Mastikation unterwirft das nicht-thermoplastische Elastomer einer sehr hohen mechanischen Beanspruchung, die zwangsläufig zu einem chemischen Abbau der Verbindungen führt. Dies führt zu einer definitiven Verschlechterung der Eigenschaften des mittels des Verfahrens hergestellten Klebers. Verstärkt wird dieser Effekt noch durch die beschriebenen Prozeßschritte der inline-Mischung und der als besonders vorteilhaft hervorgehobenen Beschichtung des Klebers auf einen Träger in einem Doppelschneckenextruder.

WO 95/25774 offenbart ebenfalls einen lösungsmittelfreien Prozeß zur Herstellung eines geschäumten druckempfindlichen Klebers aus einem nicht-thermoplastischen Elastomer. Aber auch bei diesem Verfahren wird das Elastomer unter anderem durch mehrere Mischzonen bei der Mastikation einem hohen thermisch-mechanischen Streß unterworfen, der unzweifelhaft zu einem nachteiligen Abbau des Elastomers führt.

Aufgabe der Erfindung war es, ein Verfahren zur Verfügung zu stellen, mit dem eine druckempfindliche Hotmelt-Klebemasse insbesondere aus Kautschuk hergestellt und auf Trägermaterialien beschichtet werden kann, ohne daß es während der Durchführung des Verfahrens zu einem eigenschaftsverändernden Abbau des Kautschuks kommt.

Gelöst wird diese Aufgabe durch eine druckempfindliche Hotmelt-Klebemasse, wie sie in dem Anspruch 1 näher dargestellt ist. Vorteilhafte Ausführungsformen sowie Weiterbildungen sind dabei Gegenstand der Unteransprüche. Des weiteren ist vom Erfindungsgedanken auch ein Selbstklebeband umfaßt, das unter Zuhilfenahme der druckempfindlichen Hotmelt-Klebemasse hergestellt wird.

Die druckempfindliche Hotmelt-Klebemasse auf der Basis nicht-thermoplastischer Elastomerer wird dementsprechend gemäß dem folgenden Verfahren hergestellt.

Im ersten Verfahrensschritt wird als Vorbatch eine Masse aus den Elastomeren und einem oder mehreren der folgenden Zusatzstoffe wie Füllstoffe, Alterungsschutzmittel, Weichmacher und Klebharze in einem intensiv scherenden, intensiv kühlenden Mischaggregat lösungsmittelfrei hergestellt, wobei die Masse eine Endtemperatur von 100 °C bis 160 °C aufweist.
Im zweiten Verfahrensschritt wird der Vorbatch in einem zweiten Mischaggregat mit einem oder mehreren der folgenden Zusatzstoffe wie Füllstoffe, Alterungsschutzmittel, Weichmacher und Klebharze lösungsmittelfrei vermischt und homogenisiert, wobei die Masse eine Endtemperatur von 100 °C bis 160 °C aufweist.
Die Gesamtverweilzeit der Masse bei Temperaturen über 100 °C überschreitet nicht einen Wert von 6 Minuten.
Die resultierende Hotmelt-Klebmasse weist eine Viskosität von mehr als 900 Pa*s, insbesondere 900 Pa*s bis 1200 Pa*s, bei 130 °C und einem Schergefälle von 100 s⁻¹ auf.

Dieser beschriebene zweistufige Compoundierprozeß der Elastomeren mit den jeweiligen Zuschlagstoffen erfolgt dabei stets ohne eigenschaftschädigenden Mastikationsschritt.

Vorteilhafterweise ist das nicht-thermoplastische Elastomer gewählt aus der Gruppe der Naturkautschuke, der Synthesekautschuke oder es besteht aus einem Zweierblend aus Naturkautschuk/Synthesekautschuk oder zweier Synthesekautschuke, wobei der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane gewährt werden können.

Weiterhin vorzugsweise können der druckempfindlichen Hotmelt-Klebmasse zur Verbesserung der Verarbeitbarkeit thermoplastische Elastomere mit einem Gewichtsanteil von 10 bis 90 phr, vorzugsweise von 10 bis 50 phr, zugesetzt werden.

Die gemäß Anspruch 1 hergestellte druckempfindliche Hotmelt-Klebemasse ist insbesondere zur Herstellung eines Selbstklebebandes geeignet.
Dazu wird in einem dritten Verfahrensschritt die erfindungsgemäße druckempfindliche Hotmelt-Klebemasse mit einem Auftragswerk auf einen bahnförmigen Träger lösemittelfrei beschichtet, wobei die unvernetzte druckempfindliche Hotmelt-Klebemasse nach der Beschichtung eine Viskosität von mehr als 800 Pa*s, insbesondere 800 Pa*s bis 1200 Pa*s, bei 130 °C und bei einem Schergefälle von 100 s⁻¹ aufweist.
Das Selbstklebeband derartig hergestellte Selbstklebeband ist für Einsatztemperaturen von bis zu 80 °C geeignet ist, insbesondere bei der Verwendung als Abdeckband.
Neben der lösemittelfreien Verarbeitung der zu beschichteten Masse ist aber auch eine Beschichtung der druckempfindlichen Hotmelt-Klebemasse aus der Lösung möglich. Dazu wird entweder nach dem ersten Verfahrensschritt oder dem zweiten Verfahrensschritt ein Lösungsmittel zu der jeweils hergestellten Masse gegeben.

Vorteilhafterweise erfolgt inline mit dem dritten Verfahrensschritt, also der Beschichtung auf einen bahnförmigen Träger, die Vernetzung der Selbstklebemasse durch ionisierende Strahlung, so daß Selbstklebeband für Einsatztemperaturen von bis zu 120 °C geeignet ist, insbesondere bei der Verwendung als Abdeckband.

In einer weiteren bevorzugten Ausführungsform erfolgt direkt im zweiten Verfahrensschritt oder in zusätzlichen Verfahrensschritt nach dem zweiten und vor dem dritten Verfahrensschritt die Zugabe eines thermisch aktivierbaren chemischen Vernetzers in die Hotmelt-Klebemasse. Anschließend wird nach dem dritten Verfahrensschritt die beschichtete, druckempfindliche Hotmelt-Klebemasse durch Wärme vernetzt, so daß das Selbstklebeband für Einsatztemperaturen von bis zu 160 °C geeignet ist, insbesondere bei der Verwendung als Abdeckband.
Einsetzbar sind alle vorbekannten thermisch aktivierbaren chemischen Vernetzer wie Schwefelbeschleunigersysteme, Schwefelspender oder beschleuinger, Diisocyanate und/oder Vulkanisationsharze.

Die Vernetzung der druckempfindlichen Hotmelt-Klebemasse kann weiterhin mittels einer Kombination von ionisierender Strahlung und chemischen Vernetzern erfolgen.

Der erste Verfahrensschritt, die Herstellung des Vorbatches, kann in einem Innenmischer des Typs Banbury, in einem Walzwerk oder einem kontinuierlich arbeitendem Aggregat nach dem Prinzip des Farrel Continious Mixer erfolgen.
Insbesondere der Banbury-Innenmischer gewährleistet einen hohen Durchsatz an Kautschuk und gleichzeitig eine minimale thermische Schädigung der Polymere des Kautschuks.
Alternativ dazu kann aber auch die Mischung in einem diskontinuierlich arbeitendem Gerät erfolgen.

Der zweite Verfahrensschritt, die Fertigstellung der Hotmelt-Klebemasse, kann in einem Mischer des Typs Universalkneter, in einem Doppelschneckenextruder oder einem Aggregat nach dem Prinzip des Farrel Continious Mixer erfolgen.
Alternativ dazu kann aber auch die Mischung in einem kontinuierlich arbeitendem Gerät erfolgen.

Der dritte Verfahrensschritt, die Beschichtung der Hotmelt-Klebemasse auf das Trägermaterial, kann in einem in einem Düsenauftragswerk oder Walzenauftragswerk in Kombination mit einem Extruder erfolgen.

Vorteilhafterweise werden der Vorbatch und die Hotmelt-Klebemasse nach dem ersten und zweiten Verfahrensschritt auf Raumtemperatur gekühlt. Somit ist auch eine Zwischenlagerung der Hotmelt-Klebemasse möglich.

Die ersten beiden Verfahrensschritte können zur Vermeidung von Sauerstoffeinwirkung in einer Schutzatmosphäre, vorzugsweise unter Stickstoff, durchgeführt werden.

Das beschriebene Verfahren zur Herstellung einer erfindungsgemäßen Hotmelt-Klebemasse stellt sich als ein äußerst polymerschonender Prozeß dar, der sich durch hohen Durchsatz, geringe Prozeßtemperaturen und kurze Verweilzeiten auszeichnet.

Das Verfahren liefert eine druckempfindliche Hotmelt-Klebemasse, die vorzugsweise gebildet ist aus nicht abgebauten Kautschuken oder deren Blends. Darüber hinaus sind aber auch Blends aus nicht abgebauten Kautschuken mit abgebauten Kautschuken und/oder TPE möglich.

Schließlich weist der druckempfindliche Kautschuk-Hotmelt einer lösungsmittelbasierenden Kautschukmasse vergleichbare Eigenschaften auf

Die druckempfindliche Hotmelt-Klebemasse ist ohne Einsatz von Promotoren einer effektiven Vernetzung durch ionisierende Strahlen zugänglich, und weist vergleichbare Eigenschaften wie eine lösungsmittelbasierende Kautschukmasse mit vergleichbarem Vernetzungsgrad auf.

### Beispiele

In der folgenden Tabelle sind die Rezepturen der in den Beispielen beschriebenen Kautschukmischungen sowie die im folgenden verwendeten Abkürzungen derselben angegeben.

| **Masserezepturen in Gewichts-phr (parts per hundred rubber)** | | | |
|---|---|---|---|
| | VB | HM | HMT |
| | ( Vorbatch ) | ( Hotmelt ) | ( Hotmelt, vernetzbar) |
| NR Air Dried Sheets | 100 | 100 | 100 |
| Zinkoxid, aktiv | 11,4 | 11,4 | 11,4 |
| Stearinsäure | 1,1 | 1,1 | 1,1 |
| Escorez 1202 ® | | 43,6 | 43,6 |
| Dercolyte S115 ® | 20 | 20 | 20 |
| Resin 731 D ® | | 50,9 | 50,9 |
| Ondina G 33 ® | 8 | 8 | 8 |
| Lowinox AH 25 ® | 2,5 | 2,5 | 2,5 |
| Rhenogran S 80 ® | | | 3,1 |
| Rhenogran ZEPC 80 ® | | | 4,4 |
| Rhenocure HX ® | | | 0,5 |
| | 143 | 237,5 | 245,5 |

### Beispiel 1: Druckempfindliches, mit Elektronenstrahlung vernetzbares Kautschuk-Hotmelt

### Verfahrensschritt 1: Herstellen des Vorbatches

Der Vorbatch wurde nach der als VB bezeichneten Rezeptur in einem Banbury-Kneter der Firma Werner & Pfleiderer, Stuttgart, Typ GK 120 N, nach der folgenden Mischvorschritt hergestellt:
- Kammer- und Rotortemperierung:: 60 °C
- Schaufeldrehzahl:: 45 min⁻¹

| laufende Zeit [sec] | Arbeitsschritt |
|---|---|
| 0 | Stempel lüften |
| | Befüllen des Kneters mit dem Kautschuk |
| | Kneten des Kautschuks mit geschlossenem Stempel zur Erwärmung des Materials auf 80 °C |
| 60 | Stempel lüften |
| | Befüllen des Kneters mit allen weiteren Zuschlagsstoffen, |
| | Kneten des Materials bis zu einer Massetemperatur von 120 °C |
| 180 | Stempel lüften |
| 300 | Entleeren des Kneters |
| | Massetemperatur 125 °C |

Der Vorbatch wurde mittels Walzwerken zu endlosen Fütterstreifen ausgeformt und in einer in der Gummiindustrie üblichen Batch-Off-Anlage abgekühlt. Das Prinzip des Banbury-Innenmischers gewährleistet hohen Durchsatz bei minimaler thermischer Schädigung der Polymeren.

### Verfahrensschritt 2: Fertigmischen des druckempfindlichen Kautschuk-Hotmelt

In einer Knetmaschine der Bauart VI U 20 L der Firma Aachener Misch- und Knetmaschinen-Fabrik Peter Küpper, Aachen, wurden dem Vorbatch alle weiteren Zuschlagsstoffe zugesetzt, so daß ein druckempfindliches Kautschuk-Hotmelt entsprechend der Zusammensetzung HM resultierte.

Dabei wurde nach folgender Mischvorschrift verfahren:
- Kammertemperierung:: 140 °C
- Schaufeldrehzahl:: 30 min⁻¹

| laufende Zeit [sec] | Arbeitsschritt |
|---|---|
| 0 | Befüllen des Kneters mit den Klebharzen |
| | Erwärmung des Materials auf 100 °C |
| 30 | Befüllen des Kneters mit dem Vorbatch |
| | Kneten des Materials bis zu einer Massetemperatur von 140 °C |
| 400 | Entleeren des Kneters mittels eingebauter Förderschnecke |

Die gewonnene Hotmelt-Klebemasse wurde durch die Förderschnecke zu einem endlosen Fütterstreifen ausgeformt, und dieser nach Abkühlung auf 25 °C zwischen silikonisierten Trennpapierlagen aufgewickelt.

### Verfahrensschritt 3: Beschichten des Trägermaterials

Ein in der Klebebandbranche übliches, mit üblichem Releaselack und üblichen Primer ausgerüstetes flachgekrepptes Papier wurde mittels eines biegesteifen Glattwalzen-Auftragswerkes (Walzendurchmesser 300 mm, Breite 600 mm) der Firma Windmüller & Hölscher mit dem druckempfindlichen Kautschuk-Hotmelt beschichtet. Die Zufuhr des druckempfindlichen Kautschuk-Hotmelts erfolgte über einen Schmelze-extruder der Firma Ingenieurgesellschaft W. Kiener jun. mbH, Lauchheim, mit einer Zylindertemperatur von 100 °C und einer Schneckentemperatur von 100 °C. Die Schnecke wies eine Länge von 1150 mm und einen Durchmesser von 60 mm auf.

Dabei wurden folgende Verfahrensparameter eingehalten:

| | |
|---|---|
| Beschichtungsgeschwindigkeit : m/min | 100 |
| Walzentemperatur: | 150 °C |
| Temperatur des vorgelegten druckempfindlichen Kautschuk-Hotmelts: | 100 °C |
| Masseauftrag: | 40 g/m² |

Das solchermaßen hergestellte und beschichtete HM ist in der Leistungsfähigkeit einer lösemittelbasierten Selbstklebemasse vergleichbar

Es wurde als masking tape für die Autokarosserielackierung bei moderaten Temperaturen eingesetzt. Es besitzt hohe Klebkräfte, welche durch die bekannten Rezepturvariationen in weitem Bereich einstellbar sind. Nach Trocknungszyklen bis 80 °C / 1 h ist das Klebeband rückstandsfrei von lackierten Karosserieteilen wiederablösbar.

### Verfahrensschritt 4: Vernetzen

Darüber hinaus ist das solchermaßen hergestellte und beschichtete HM zwecks Leistungssteigerung einer effektiven Vernetzung durch ionisierende Strahlung zugänglich. Der beschichtete Papierträger wurde mit Elektronenstrahlung behandelt.

Bei einer Strahlendosis von 20 kGy bei 175 kV Beschleunigungsspannung ist das resultierende masking tape rückstandsfrei von lackierten Karosserieteilen nach Trocknungszyklen bis 120 °C/1 h wiederablösbar.

### Beispiel 2: Druckempfindliches, chemisch vernetztes Kautschuk-Hotmelt

Durch die kühle Technologie wird der Einsatz chemischer Vernetzer möglich, der in der herkömmlichen Hotmelt-Technologie wegen der hohen Misch- und Beschichtungstemperaturen unmöglich ist.

Im folgenden Beispiel wurde ein Schwefel/Dithiocarbamat/Amin-Beschleunigersystem verwendet.

### Verfahrensschritt 1: Herstellen des Vorbatches

Die Herstellung des Vorbatches geschieht in unveränderter Weise gegenüber dem unvernetzten HM.

### Verfahrensschritt 2: Fertigmischen des druckempfindlichen Kautschuk-Hotmelt

Leicht geänderte Mischvorschrift gegenüber dem unvernetzten HM:
- Kammertemperierung:: 80 °C
- Schaufeldrehzahl:: 30 min⁻¹

| laufende Zeit [sec] | Arbeitsschritt |
|---|---|
| 0 | Befüllen des Kneters mit den Klebharzen |
| | Erwärmung des Materials auf 80 °C |
| 30 | Befüllen des Kneters mit dem Vorbatch. |
| | Kneten des Materials bis zu einer Massetemperatur von 95 °C |
| 300 | Befüllen des Kneters mit den Vernetzern |
| | Kneten des Materials bis zu einer Massetemperatur von 115 °C |
| 400 | Entleeren des Kneters mittels eingebauter Förderschnecke |

### Verfahrensschritt 3: Beschichten des Trägermaterials

Die Gegenwart thermischer Vernetzer erforderte niedrigere Beschichtungstemperaturen. Gegenüber dem unvernetzten HM wurden die Verfahrensparameter geändert.

Dabei wurden folgende Verfahrensparameter eingehalten :

| | |
|---|---|
| Beschichtungssgeschwindigkeit : m/min | 100 |
| Walzentemperatur: | 120 °C |
| Temperatur des vorgelegten druckempfindlichen Kautschuk-Hotmelts: | 100 °C |
| Masseauftrag: | 40 g/m² |

### Verfahrensschritt 4: Vernetzen

Das solchermaßen hergestellte und beschichtete HM ist in der Leistungsfähigkeit einer lösemittelbasierten Selbstklebemasse vergleichbar, es war nach thermischer Vernetzung für ein masking tape für die Autokarosserielackierung bei höchsten Temperaturen geeignet.

Die Vernetzung erfolgte in einem Vulkanisationskanal mit effektiver Verweilzeit von 4 min/120 °C.
Das solchermaßen hergestellte masking tape ist rückstandsfrei von lackierten Karosserieteilen nach Trocknungszyklen bis 160 °C/1 h wiederablösbar.

## Patentansprüche

1. Druckempfindliche Hotmelt-Klebemasse auf der Basis nicht-thermoplastischer Elastomerer, erhalten dadurch, daß
a) als Vorbatch eine Masse aus den Elastomeren und einem oder mehreren der folgenden Zusafzstoffe wie Füllstoffe, Alterungsschutzmittel, Weichmacher und Klebharze in einem intensiv scherenden, intensiv kühlenden Mischaggregat lösungsmittelfrei hergestellt wird, wobei die Masse eine Endtemperatur von 100 °C bis 160 °C aufweist,
b) der Vorbatch in einem zweiten Mischaggregat mit einem oder mehreren der folgenden Zusatzstoffe wie Füllstoffe, Alterungsschutzmittel, Weichmacher und Klebharze lösungsmittelfrei vermischt und homogenisiert wird, wobei die Masse eine Endtemperatur von 100 °C bis 160 °C aufweist,
und wobei die Gesamtverweilzeit der Masse bei Temperaturen über 100 °C einen Wert von 6 Minuten nicht überschreitet,
so daß die resultierende Hotmelt-Klebmasse eine Viskosität von mehr als 900 Pa*s, insbesondere 900 Pa*s bis 1200 Pa*s, bei 130 °C und einem Schergefälle von 100 s⁻¹ aufweist.

2. Druckempfindliche Hotmelt-Klebemasse nach Anspruch 1, dadurch gekennzeichnet, daß das nicht-thermoplastische Elastomer gewählt ist aus der Gruppe der Naturkautschuke, der Synthesekautschuke oder besteht aus einem Zweierblend aus Naturkautschuk/Synthesekautschuk oder zweier Synthesekautschuke.

3. Druckempfindliche Hotmet-Klebemasse nach den Ansprüchen 1 und 2, dadurch gekennzeichnet, daß der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane gewählt sind.

4. Druckempfindliche Hotmelt-Klebemasse nach den Ansprüchen 1 bis 3, dadurch gekennzeichnet, daß der druckempfindlichen Hotmelt-Klebmasse zur Verbesserung der Verarbeitbarkeit thermoplastische Elastomere mit einem Gewichtsanteil von 10 bis 90 phr, vorzugsweise von 10 bis 50 phr, zugesetzt sind.

5. Selbstklebeband erhalten dadurch, daß die gemäß Anspruch 1 hergestellte druckempfindliche Hotmelt-Klebemasse
c) lösemittelfrei mit einem Auftragswerk auf einen bahnförmigen Träger beschichtet wird,
wobei die unvernetzte druckempfindliche Hotmelt-Klebemasse nach der Beschichtung eine Viskosität von mehr als 800 Pa*s, insbesondere 800 Pa*s bis 1200 Pa*s, bei 130 °C und bei einem Schergefälle von 100 s⁻¹ aufweist, und
wobei das Selbstklebeband für Einsatztemperaturen von bis zu 80 °C geeignet ist.

6. Selbstklebeband nach Anspruch 5, dadurch gekennzeichnet, daß inline mit dem dritten Verfahrensschritt die Vernetzung der Selbstklebemasse durch ionisierende Strahlung erfolgt, so daß das Selbstklebeband für Einsatztemperaturen von bis zu 120 °C geeignet ist.

7. Selbstklebeband nach den Ansprüchen 5 oder 6, dadurch gekennzeichnet, daß direkt im zweiten Verfahrensschritt oder in einem weiteren Verfahrensschritt nach dem zweiten und vor dem dritten Verfahrensschritt die Zugabe eines thermisch aktivierbaren chemischen Vernetzers in die Hotmelt-Klebemasse erfolgt, und
nach dem dritten Verfahrensschritt die Vernetzung der druckempfindlichen HotmeltKlebemasse durch Warme erfolgt,
so daß das Selbstklebeband für Einsatztemperaturen von bis zu 160 °C geeignet ist.

8. Selbstklebeband nach den Ansprüchen 5 bis 7, dadurch gekennzeichnet, daß die Vernetzung der druckempfindlichen Hotmelt-Klebemasse mittels einer Kombination von ionisierender Strahlung und chemischen Vernetzern erfolgt, so daß das Selbstklebeband für Einsatztemperaturen von bis zu 160 °C geeignet ist.

9. Selbstklebeband nach den Ansprüchen 5 bis 8, dadurch gekennzeichnet, daß der erste Verfahrensschritt in einem Innenmischer des Typs Banbury, in einem Walzwerk oder einem kontinuierlich arbeitendem Aggregat nach dem Prinzip des Farrel Continious Mixer erfolgt.

10. Selbstklebeband nach den Ansprüchen 5 bis 9, dadurch gekennzeichnet, daß der zweite Verfahrensschritt in einem Mischer des Typs Universalkneter, in einem Doppelschneckenextruder oder einem Aggregat nach dem Prinzip des Farrel Continious Mixer erfolgt.

11. Selbstklebeband nach den Ansprüchen 5 bis 10, dadurch gekennzeichnet, daß der dritte Verfahrensschritt in einem in einem Düsenauftragswerk oder Walzenauftragswerk in Kombination mit einem Extruder erfolgt.

12. Selbstklebeband nach den Ansprüchen 5 bis 11, dadurch gekennzeichnet, daß Vorbatch und Hotmelt-Klebemassen nach dem ersten Verfahrensschritt und dem zweiten Verfahrensschritt auf Raumtemperatur gekühlt werden.

13. Selbstklebeband nach den Ansprüchen 5 bis 12, dadurch gekennzeichnet, daß der erste und der zweite Verfahrensschritt zur Vermeidung von Sauerstoffeinwirkung in einer Schutzatmosphäre, vorzugsweise unter Stickstoff, durchgeführt werden.
